# EUROPEAN PATENT SPECIFICATION

(11) **EP 2 141 600 B1**
(45) Date of publication and mention of the grant of the patent: **30.01.2013**
(21) Application number: 08740811.8
(22) Date of filing: 24.04.2008
(51) Int. Cl.: G06F 13/16

(54) **MEMORY ACCESS CONTROL DEVICE**
STEUERUNGSVORRICHTUNG FÜR EINEN SPEICHERZUGANG
DISPOSITIF DE COMMANDE D'ACCÈS À LA MÉMOIRE

(30) Priority: 26.04.2007 JP 2007117318
(43) Date of publication of application: 06.01.2010
(73) Proprietor: NEC Corporation, Minato-ku Tokyo 108-8001 (JP)
(72) Inventor: TAKIZAWA, Tetsuro, Tokyo 108-8001 (JP)
(74) Representative: Robson, Aidan John
(86) International application number: PCT/JP2008/057884
(87) International publication number: WO 2008/136332

(56) References cited:
- EP-A1- 1 313 019
- WO-A1-99/00736
- WO-A1-2007/004696
- JP-A- 2001 175 530
- JP-A- 2002 007 203
- JP-A- 2002 123 420
- US-A1- 2006 059 320

## Description

### TECHNICAL FIELD

This invention relates to a memory access control apparatus and, more particularly, to an apparatus suited for application to memory access control for reducing memory access latency of a prescribed memory master in a unified memory architecture or multiprocessor system.

### BACKGROUND ART

In a unified memory architecture or multiprocessor system, a plurality of memory masters make time-shared use of a single memory.

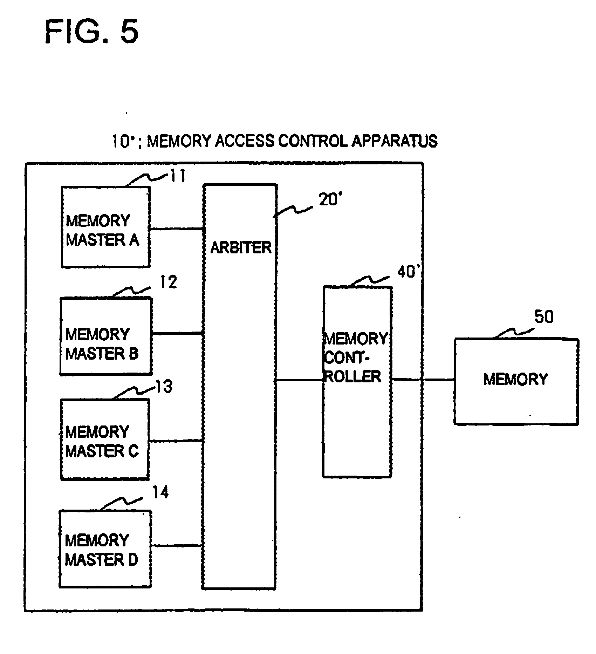

Fig. 5. is a diagram illustrating an example of the typical configuration of a memory access control apparatus. With reference to Fig. 5, access requests from a plurality of memory masters in a memory access control apparatus 10' are arbitrated by an arbiter 20' and an access request of a memory master that has been allowed is issued to a memory 50 via a memory controller 40'.

As for the timing of arbitration by the arbiter 20', arbitration is carried out upon completion of an access request of a burst length more than one from a memory master. As a consequence, during the time that a certain memory master is using the memory 50, another memory master cannot use the memory 50 until the current access is completed.

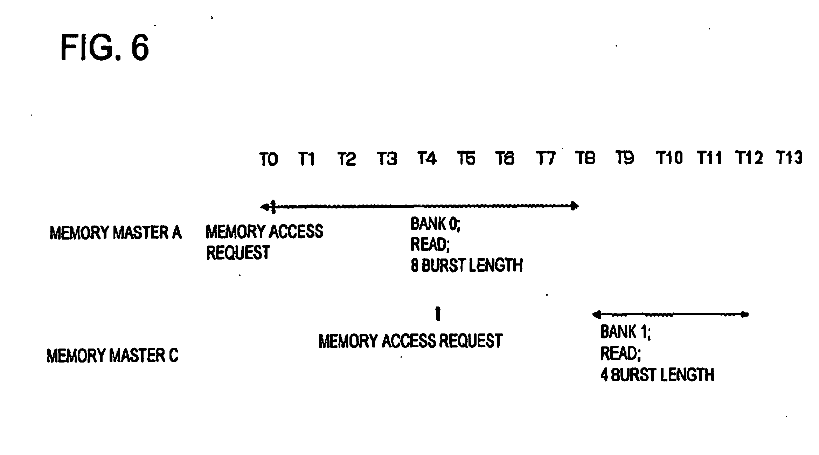

Fig. 6 is a diagram for describing an example of operation of the memory access control apparatus 10' of Fig. 5. At time T0, a read access request of an eight burst length to a bank 0 of the memory 50 is issued from a memory master A, and at time T1, a memory access request of 8-burst length is output from the arbiter 20' to the memory controller 40'.

At time T4, although a memory master C outputs a read access request of 4-burst length to a bank 1 of memory 50, the memory controller 40' is executing the memory access request from the memory master A and the memory access request from the memory master C is not processed. At time T9, memory access from the memory master A ends and the memory access request from the memory master C is executed.

In the example shown in Fig. 6, if there is an access request from the memory master C at timing T4 during the execution of the access request from memory master A from timing T0, the access request from the memory master C is made to wait and processing of the access request (a 4-byte burst read to bank 1) from the memory master C is executed after the processing of the access request (an eight-byte burst read to bank 0) of memory master A ends.

Patent Document I discloses a memory control apparatus for optimizing setting of burst length with respect to an access request of any burst length, and reducing updating of burst length as much as possible. The invention of Patent Document 1 reduces the frequency with which a mode register is set.

Patent Document 2 discloses a memory access apparatus having access dividing means for dividing a memory access request, which has been arbitrated by arbitration means, into memory access instructions of a plurality of memories that access data of a fixed length, and issuing the memory access instructions to memory control means. This invention divides a memory access request of the memory access means, which request is input to the arbitration means, by the access dividing means and causes a memory access request from a CPU to squeeze in between divided memory access instructions.

As an arrangement having a plurality of arbitration circuits, reference should be had to the description in Patent Document 3, by way of example.

Patent Document 4 discloses an input/output control apparatus in which, when it is evident that a data transfer request from a high-priority port will wait because a main memory is busy, a data transfer request to a main-memory bank for which the main memory is not busy is selected and sent to the main memory even if the request is from a low-priority port. A state in which the input/output apparatus waits is avoided and it possible to perform a highly efficient data transfer.

[Patent Document 1]
   Japanese Patent Kokai Publication No. JP2001-135079A
[Patent Document 2]
   Japanese Patent Kokai Publication No. JP2002-123420A
[Patent Document 3]
   Japanese Patent Kokai Publication No. JP2005-316609A
[Patent Document 4]
   Japanese Patent Kokai Publication No. JP-A-59-225426

The document EP1 313 019 discloses a memory access control apparatus comprising a plurality of memory masters, each of which issues an access request to the memory, an arbiter that receives the access requests from the plurality of memory masters and arbitrates the access requests, wherein the arbiter arbitrates the request so that in a case where a memory bank used by an access request currently being executed and a memory bank to be accessed are different and the type of the access request from one master currently being executed and the type of access to be requested from another master are identical, priority is given to the another requesting master.

The disclosure WO-A-99/00736 discloses an apparatus as specified in the preamble of claim 1.

### SUMMARY

An analysis of the related art according to the present invention is offered below.
As described with reference to Figs. 5 and 6, access requests from a plurality of memory masters are arbitrated by the arbiter 20'. With regard to the timing of arbitration, however, arbitration is merely carried out upon completion of an access request of a burst length greater than or equal to 2 from a memory master. As a consequence, during the time that a certain memory master is using the memory, another memory master cannot use the memory 50 until the current access is completed.

In a unified memory architecture or multiprocessor system, there are cases where memory access cannot start immediately even through a memory master issues an access request to the memory. As a result, it is difficult to shorten memory access latency.

Further, in a unified memory architecture or multiprocessor system, memory accesses from a plurality of memory masters contend and therefore an enhancement of memory band width is sought. In order to achieve this, however, it is required that memory access efficiency be raised.

In order to raise memory access efficiency, enlarging the burst length of per-time memory access of the memory master is effective. However, this leads to further prolongation of memory access latency.

Memory access latency has a major effect upon CPU performance. In a unified memory architecture or multiprocessor system, therefore, a problem is that it is difficult to improve CPU performance.

Accordingly, an object of the present invention is to provide a memory access control apparatus in which it is possible to reduce memory access latency of access from a prescribed memory master.

The invention disclosed in the present application has the structure set forth below in order to solve the problems cited above.

The access control apparatus according to the present invention is defined in independent claim 1.

Further embodiments of the invention are specified in the appended dependent claims.

In accordance with the present invention, it is possible to provide a memory access control apparatus in which memory access latency of access from a prescribed memory master can be reduced.

### BRIEF DESCRIPTION OF THE DRAWINGS

Fig. 1 is a diagram illustrating the configuration of an exemplary embodiment of the present invention;
Fig. 2 is a diagram illustrating the configuration of an arbiter in an exemplary embodiment of the present invention;
Fig. 3 is a diagram illustrating the configuration of a sub-arbiter in an exemplary embodiment of the present invention;
Fig. 4 is a diagram illustrating an example of a memory access sequence in an exemplary embodiment of the present invention;
Fig. 5 is a diagram illustrating the configuration of a system according to the related art; and
Fig. 6 is a diagram illustrating a memory access sequence in an system according to the related art.

### PREFERRED MODES

The present invention will be described in further detail with reference to the accompanying drawings. The present invention is so adapted that in a case where there is a memory access request from a prescribed memory master, the memory access latency of which is desired to be shortened, while a certain memory master is using the memory, the memory access by the memory master currently using the memory is suspended and the memory access by the prescribed memory master whose memory access latency is desired to be shortened is allowed to squeeze in. If interruption is performed unconditionally, memory access efficiency will undergo a marked decline. Interruption is allowed, therefore, only in a case where conditions are such that memory access efficiency will not be degraded.

In the present invention, besides an arbiter (20), a sub-arbiter (30) is provided for monitoring and arbitrating a memory access request by a prescribed memory master whose memory access latency is desired to be shortened.

The arbiter (20) includes an access dividing section (22) which divides memory access of a burst length more than one from a memory master into a plurality of short access units and sending a memory controller a memory access request for every short access unit.

If there is an access request from a prescribed memory master the memory access latency of which is desired to be shortened, the sub-arbiter (30) immediately issues the access request to memory controller (40). The sub-arbiter (30) monitors the memory access request from the arbiter (20). It is so arranged that the sub-arbiter (30) will not issue a memory access request in a case where memory access efficiency would be degraded if the sub-arbiter (30) were to issue the memory access request. It is so arranged that a memory access request from the sub-arbiter (30) is granted a priority higher than that of a memory access request from the arbiter (20). Since a memory access request from the arbiter (20) has been divided into short units, a memory access request from the sub-arbiter (30) is executed immediately (in a short waiting time). As a result, memory access latency by the prescribed memory master can be shortened. Specific exemplary embodiments will be described below.

### [Exemplary Embodiments]

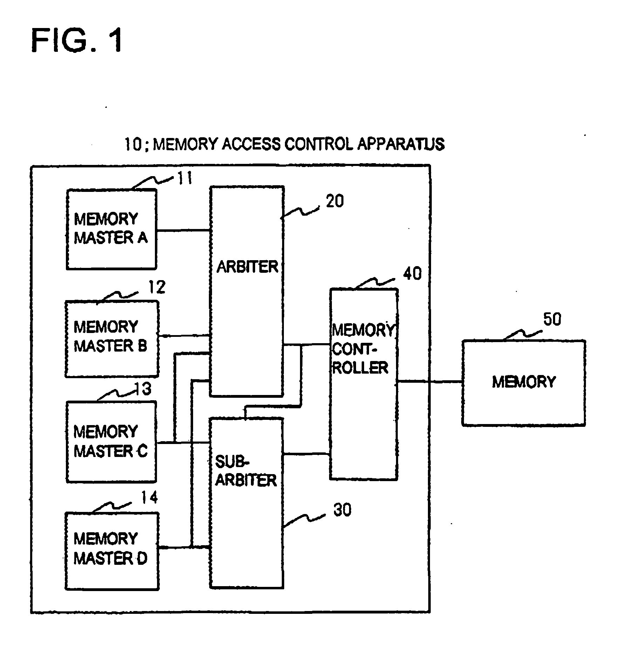

Fig. 1 is a diagram illustrating the configuration of a first exemplary embodiment of the present invention. The invention includes a memory access control apparatus 10 and a memory 50 having a plurality of banks. The memory access control apparatus 10 includes memory masters A (11) and B (12), memory masters C (13) and D (14), the memory access latency of which is desired to be shortened, an arbiter 20, a sub-arbiter 30 and a memory controller 40.

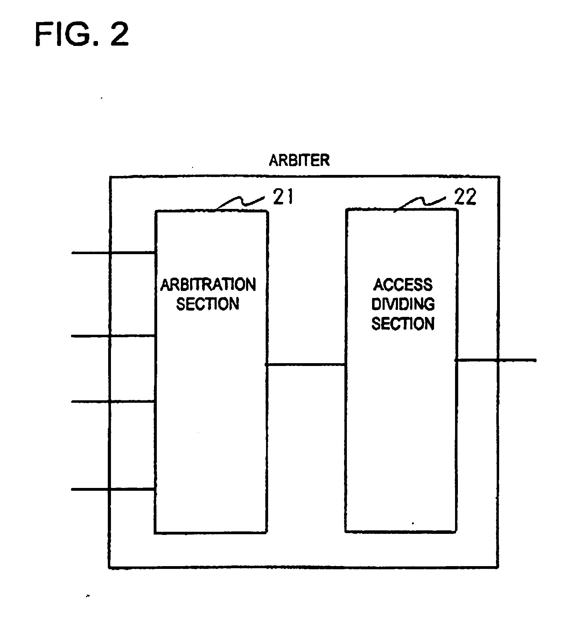

Fig. 2 is a diagram illustrating an example of the configuration of the arbiter 20 of Fig. 1. In this exemplary embodiment, with reference to Fig. 2, the arbiter 20 includes an arbitration section 21 which selects one memory master out of the plurality of memory masters 11 to 14, and an access dividing section 22 which, in a case where an access request from the memory master comprises has a burst length greater than two, divides this access request into accesses of a short burst length.

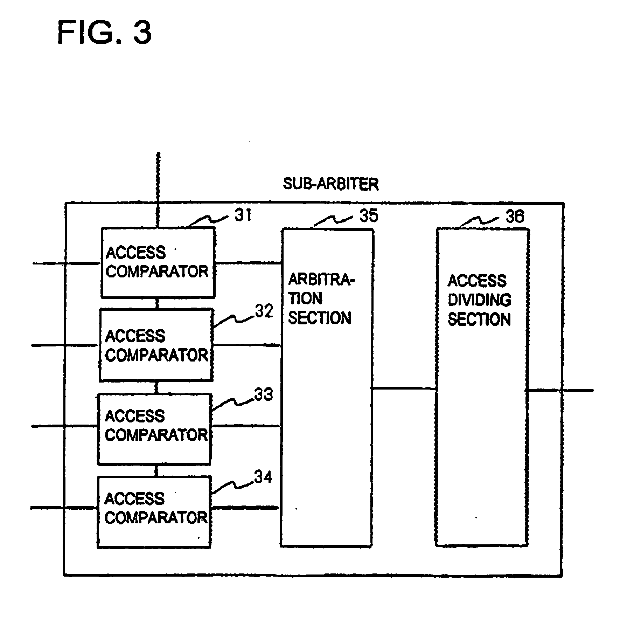

Fig. 3 is a diagram illustrating an example of the configuration of the sub-arbiter 30 of Fig. 1. In this exemplary embodiment, with reference to Fig. 3, the sub-arbiter 30 includes access comparators 31, 32, 33 and 34 which, for every memory master connected, compare access content of the memory master that the arbiter 20 is currently executing and access content that this memory master is requesting; an arbitration section 35 which selects one memory master out of the plurality thereof; and an access dividing section 36 which, in a case where an access request from the memory master has a burst length more than one, divides this access request into accesses of a short burst length.

The operation of this exemplary embodiment will be described below. The memory masters 11 to 14 issue respective memory access requests to the arbiter 20.

The arbiter 20 monitors the access requests from the plurality of memory masters 11 to 14. If memory access requests are issued from one or more memory masters and memory access is not in progress, then the arbiter 20 accepts an access request from a memory master. In a case where access requests have been issued from a plurality of the memory masters, the arbitration section 21 accepts an access request from one memory master, out of the plurality thereof issuing access requests, in accordance with a certain condition. By way of example, here the certain condition may be a fixed order of priority or a round-robin scheme.

In a case where an access request of a burst length more than one has been issued from a memory master whose request has been accepted, the arbiter 20 divides this access request into a plurality of short access units by the access dividing section 22. In the present invention, a short unit is an arbitrary length but preferably is the minimum access unit of the memory.

For example, in a case where the access dividing section 22 divides an access request into 2-burst length units, an 8-burst length access request from a memory master is divided into four 2-burst length access requests. In this case, the memory master issues a 2-burst burst access request to the memory controller 40 four times. Addresses of the individual access requests after access division are generated by the access dividing section 22.

The sub-arbiter 30 performs a series of control operations.
(a) The sub-arbiter 30 monitors requests from a plurality of memory masters whose memory access latency is desired to be shortened.
(b) Memory access requests are issued from one or more memory masters.
(c) The arbiter 20 is executing memory access.
(d) Using the access comparators 31 to 34 connected to the memory masters, the sub-arbiter 30 determines whether a condition is satisfied, the condition being that memory access efficiency will not decline even if memory access currently being executed by the arbiter 20 and memory access for which an access request is to be accepted by the sub-arbiter 30 are executed in succession.
(e) In a case where there are one or more memory masters for which the results of the determination by the access comparators 31 to 34 are true, the sub-arbiter 30 accepts an access request.

In a case where access requests have been issued from a plurality of memory masters and the results that are output from the access comparators connected to the plurality of memory masters are true, the arbitration section 35 accepts an access request from one memory master among these memory masters in accordance with a certain condition. By way of example, here the certain condition may be a fixed order of priority or a round-robin scheme.

When the sub-arbiter 30 accepts an access request, it issues the access request to the memory controller 40 immediately.

In a case where an access request having a burst length more than one has been issued from a memory master whose request has been accepted, the request is divided into a plurality of short access units by the access dividing section 36. However, the access dividing section 36 of the sub-arbiter 30 may just as well be eliminated. That is, an access request accepted by the sub-arbiter 30 need not be divided into short units.

The condition under which it is decided by the access comparators 31 to 34 that the memory access efficiency will not decline, is a case where:
(A) if a memory comprising a plurality of banks has been connected, the memory bank in use by an access request currently being executed by the arbiter 20 and a memory bank that the sub-arbiter 30 is to access are different; and
(B) the type of memory access, read or write, currently being executed by the arbiter 20 and the type of memory access, read or write, to be performed by the sub-arbiter 30 are identical.

By way of example, in a case where memory access currently being executed by the arbiter 20 is directed to bank 0 of the memory when a memory comprising four banks 0, 1, 2 and 3 has been connected, the sub-arbiter 30 will only accept memory access requests directed to banks 1, 2 and 3 and will not accept a memory access request directed to bank 0 of the memory.

Further, in a case where memory access being executed by the arbiter 20 is read, the sub-arbiter 30 will accept only a read access request and not a write memory access request.

If a memory comprising a single bank has been connected, a case where the type of memory access, read or write, currently being executed by the arbiter 20 and the type of memory access, read or write, to be performed by the sub-arbiter 30 are identical is the condition that there will be no decline in memory access efficiency.

The memory controller 40 accepts access requests from the arbiter 20 and sub-arbiter 30, generates the control signal of the memory 50 in accordance therewith and executes memory access.

In a case where memory access requests have been issued from both the arbiter 20 and the sub-arbiter 30, the memory controller 40 executes the memory access request of the sub-arbiter at a higher priority.

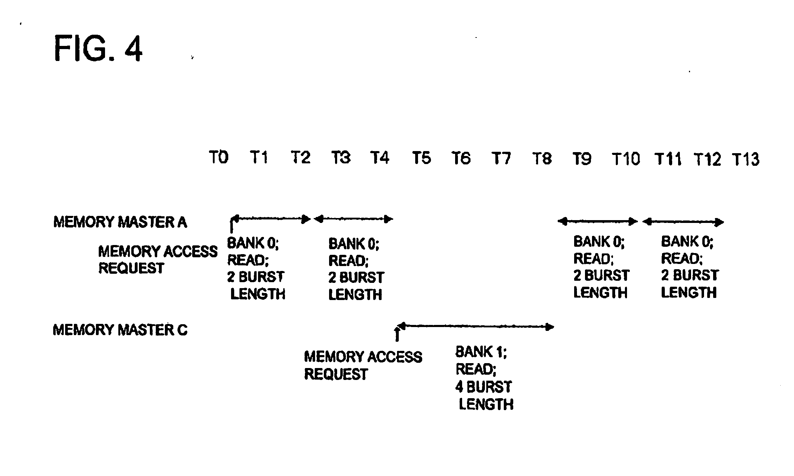

An specific example of operation of this exemplary embodiment will be described next with reference to Fig. 4. If memory master A issues an 8-burst length read memory access request to bank 0 of memory 50 at time T0, the arbiter 20 is not executing memory access at this time and therefore immediately accepts the memory access request from the memory master A, divides the request into two-burst memory access four times and, at time T1, outputs the initial two-burst access request to the memory controller 40.

At time T3, the initial 2-burst length read access ends and the arbiter 20 outputs the second 2-burst length read access request.

If memory master C issues a 4-burst length read memory access request to bank 1 of the memory at time T4, the sub-arbiter 30 compares this access with the access currently being executed by the arbiter 20. Since the access is to a different bank and the access requests are of the same type, the sub-arbiter 30 outputs a four-burst read access request to the memory controller 40 at time T5.

In this exemplary embodiment, a memory access request that has been accepted by the sub-arbiter 30 is not divided into short units.

Although a third access request is issued from the arbiter 20 at the same time, the memory controller grants priority to the memory access request from the sub-arbiter 30 and executes four-burst read access to bank 1.

At time T9, memory access from the sub-arbiter 30 ends and the third memory access request from the arbiter 20 is accepted and executed.

At time T11, the third read access ends and the final read access request is output. All access ends at time T13.

In accordance with this exemplary embodiment, memory access from the memory master C ends at time T9, as shown in Fig. 4, whereas it ends at time T13 in Fig. 6, which is referred to in the description of the related art.

It will be appreciated that memory access latency of the memory master C is reduced with the memory access apparatus of this exemplary embodiment.

In accordance with the present invention, memory access latency from a prescribed memory master can be shortened in a unified memory architecture or multiprocessor system, and it is possible to maintain a high memory access efficiency for the overall system.

## Claims

1. An access control apparatus comprising:
an arbiter that receives access requests from a plurality of master apparatuses and that arbitrates the access requests to a device
a sub-arbiter that receives access requests **characterized in that** said sub arbiter receives said access requests from at least a part of the master apparatuses, the access time of which is desired to be shortened, out of the plurality of master apparatuses, and that arbitrates the access requests; and
a controller that receives access requests from the arbiter and the sub-arbiter and that executes access to said device connected thereto;
wherein in a case where an access destination of the device used by an access request allowed by the arbiter and currently being executed and an access destination of the device to be accessed by a master apparatus via the sub-arbiter are different, and
the type of an access request allowed by the arbiter and currently being executed and the type of access to be performed by a master apparatus via the sub-arbiter are identical,
the controller suspends access by the arbiter and allows the access by the sub-arbiter to squeeze in.

2. The access control apparatus according to claim 1 wherein the sub-arbiter monitors a memory access request from the arbiter and exercises control in such a manner that in a case where access efficiency would be degraded if the sub-arbiter issues a memory access request, the sub-arbiter refrains from issuing the access request.

3. A memory access control apparatus comprising the access control apparatus of claim 5, wherein said master apparatuses are memory masters, said device is a memory, said controller is a memory controller and said access destination of the device is a memory bank.

4. The memory access apparatus according to claim 3 wherein the sub-arbiter monitors a memory access request from the arbiter and exercises control in such a manner that in a case where memory access efficiency would be degraded if the sub-arbiter issues a memory access request, the sub-arbiter refrains from issuing the memory access request to the memory controller.

5. The memory access apparatus according to claim 3 wherein in a case where there are a plurality of the memory masters which satisfy a condition that there will be no decline in memory access efficiency, even if memory access for which the access request has been allowed by the arbiter and which is currently being executed and memory access which the sub-arbiter accepts are executed in succession, when the sub-arbiter accepts access requests from a plurality of the memory masters while the memory controller that has received an access request from the arbiter issued by the memory master is executing memory access,
the sub-arbiter selects the memory master for which the access request is to be executed from among the plurality of the memory masters that satisfy the condition in accordance with a predetermined criteria, and
the memory controller executes the access request selected by the sub-arbiter.

6. The memory access apparatus according to claim 3 wherein the sub-arbiter includes:
one or a plurality of access comparators, in association with respective ones of one or a plurality of memory masters connected thereto, each of the access comparators comparing access content of a memory master that the arbiter is currently executing and access content that the memory master is requesting; and
an arbitration section that selects one memory master out of the plurality of memory masters;
wherein the sub-arbiter monitors an access request from a memory master, from among the plurality of memory masters, the memory access latency of which is desired to be shortened; and
decides, by the access comparators connected to the memory masters, whether a condition is satisfied, the condition being that memory access requests have been issued from one or more memory masters, the arbiter is executing memory access, and there will be no decline in memory access efficiency, even if memory access being executed by the arbiter and memory access for which an access request is to be accepted by the sub-arbiter are executed in succession, and
accepts an access request in a case where there are one or more memory masters for which the results of the decision by the access comparators are true.

## Patentansprüche

1. Zugriffssteuervorrichtung, die Folgendes beinhaltet:
eine Entscheidungseinheit, die Zugriffsanforderungen von einer Vielzahl von Mastervorrichtungen empfängt und die über die Zugriffsanforderungen an ein Gerät entscheidet;
eine Unter-Entscheidungseinheit, die Zugriffsanforderungen empfängt, **dadurch gekennzeichnet, dass** die Unter-Entscheidungseinheit die Zugriffsanforderungen von mindestens einem Teil der Mastervorrichtungen, deren Zugriffszeit wunschgemäß verkürzt sein soll, aus der Vielzahl von Mastervorrichtungen empfängt, und die über die Zugriffsanforderungen entscheidet; und
eine Steuereinheit, die Zugriffsanforderungen von der Entscheidungseinheit und der Unter-Entscheidungseinheit empfängt und die Zugriff auf das damit verbundene Gerät ausführt;
wobei in einem Fall, in dem ein Zugriffsziel des Geräts, das von einer Zugriffsanforderung verwendet wird, die von der Entscheidungseinheit gewährt und momentan ausgeführt wird, und ein Zugriffsziel des Geräts, auf das von einer Mastervorrichtung über die Unter-Entscheidungseinheit zugegriffen werden soll, unterschiedlich sind, und
der Typ einer Zugriffsanforderung, die von der Entscheidungseinheit gewährt und momentan ausgeführt wird, und der Typ eines Zugriffs, der von einer Mastervorrichtung über die Unter-Entscheidungseinheit durchgeführt werden soll, identisch sind,
die Steuereinheit Zugriff durch die Entscheidungseinheit unterbricht und Einschieben des Zugriffs durch die Unter-Entscheidungseinheit gewährt.

2. Zugriffssteuervorrichtung gemäß Anspruch 1, wobei die Unter-Entscheidungseinheit eine Speicherzugriffsanforderung von der Entscheidungseinheit überwacht und Steuerung derart ausübt, dass in einem Fall, in dem Zugriffseffizienz vermindert wäre, falls die Unter-Entscheidungseinheit eine Speicherzugriffsanforderung ausgibt, die Unter-Entscheidungseinheit es unterlässt, die Zugriffsanforderung auszugeben.

3. Speicherzugriffssteuervorrichtung, welche die Zugriffssteuervorrichtung gemäß Anspruch 5 beinhaltet, wobei die Mastervorrichtungen Speichermaster sind, das Gerät ein Speicher ist, die Steuereinheit eine Speichersteuereinheit ist und das Zugriffsziel des Geräts eine Speicherbank ist.

4. Speicherzugriffsvorrichtung gemäß Anspruch 3, wobei die Unter-Entscheidungseinheit eine Speicherzugriffsanforderung von der Entscheidungseinheit überwacht und Steuerung derart ausübt, dass in einem Fall, in dem Speicherzugriffseffizienz vermindert wäre, falls die Unter-Entscheidungseinheit eine Speicherzugriffsanforderung ausgibt, die Unter-Entscheidungseinheit es unterlässt, die Speicherzugriffsanforderung an die Speichersteuereinheit auszugeben.

5. Speicherzugriffsvorrichtung gemäß Anspruch 3, wobei in einem Fall, in dem eine Vielzahl der Speichermaster vorhanden sind, die eine Bedingung erfüllen, dass keine Verringerung der Speicherzugriffseffizienz auftreten wird, selbst wenn Speicherzugriff, für den die Zugriffsanforderung von der Entscheidungseinheit gewährt worden ist und die momentan ausgeführt wird, und Speicherzugriff, den die Unter-Entscheidungseinheit akzeptiert, nacheinander ausgeführt werden, wenn die Unter-Entscheidungseinheit Zugriffsanforderungen von einer Vielzahl der Speichermaster akzeptiert, während die Speichersteuereinheit, die eine vom Speichermaster ausgegebene Zugriffsanforderung von der Entscheidungseinheit empfangen hat, gerade Speicherzugriff ausführt,
die Unter-Entscheidungseinheit den Speichermaster auswählt, für den die Zugriffsanforderung von unter der Vielzahl der Speichermaster, welche die Bedingung erfüllen, gemäß einem vorbestimmten Kriterium ausgeführt werden soll, und
die Speichersteuereinheit die von der Unter-Entscheidungseinheit ausgewählte Zugriffsanforderung ausführt.

6. Speicherzugriffsvorrichtung gemäß Anspruch 3, wobei die Unter-Entscheidungseinheit Folgendes enthält:
einen oder eine Vielzahl von Zugriffsvergleichern in Assoziation mit jeweiligen eines oder einer Vielzahl von damit verbundenen Speichermastern, wobei jeder der Zugriffsvergleicher Zugriffsinhalt eines Speichermasters, den die Entscheidungseinheit momentan ausführt, und Zugriffsinhalt, den der Speichermeister gerade anfordert, vergleicht; und
einen Entscheidungsabschnitt, der einen Speichermaster aus der Vielzahl von Speichermastern auswählt;
wobei die Unter-Entscheidungseinheit eine Zugriffsanforderung von einem Speichermaster von unter der Vielzahl von Speichermastern überwacht, deren Speicherzugriffslatenz wunschgemäß verkürzt sein soll; und
durch die mit den Speichermastern verbundenen Zugriffsvergleicher festlegt, ob eine Bedingung erfüllt ist, wobei die Bedingung ist, dass Speicherzugriffsanforderungen von einem oder mehreren Speichermastern ausgegeben worden sind, wobei die Entscheidungseinheit Speicherzugriff gerade ausführt, und keine Verringerung der Speicherzugriffseffizienz auftreten wird, selbst wenn Speicherzugriff, der von der Entscheidungseinheit ausgeführt wird, und Speicherzugriff, für den von der Unter-Entscheidungseinheit eine Zugriffsanforderung akzeptiert werden soll, nacheinander ausgeführt werden, und
eine Zugriffsanforderung in einem Fall akzeptiert, in dem ein oder mehrere Speichermaster vorhanden sind, für welche die Ergebnisse der Festlegung durch die Zugriffsvergleicher wahr sind.

## Revendications

1. Appareil de commande d'accès comprenant :
un arbitre qui reçoit des demandes d'accès en provenance d'une pluralité d'appareils maîtres et qui arbitre les demandes d'accès à un dispositif ;
un sous-arbitre qui reçoit des demandes d'accès, **caractérisé en ce que** ledit sous-arbitre reçoit lesdites demandes d'accès en provenance d'au moins une partie des appareils maîtres dont on souhaite raccourcir le temps d'accès, parmi la pluralité d'appareils maîtres, et qui arbitre les demandes d'accès ; et
une unité de commande qui reçoit des demandes d'accès en provenance de l'arbitre et du sous-arbitre et qui exécute l'accès audit dispositif y étant connecté ;
dans lequel dans un cas où une destination d'accès du dispositif utilisée par une demande d'accès autorisée par l'arbitre et actuellement en cours d'exécution et une destination d'accès du dispositif à laquelle un appareil maître doit accéder via le sous-arbitre sont différentes, et
le type d'une demande d'accès autorisée par l'arbitre et actuellement en cours d'exécution et le type d'accès devant être réalisé par un appareil maître via le sous-arbitre sont identiques,
l'unité de commande suspend l'accès par l'arbitre et autorise l'accès par le sous-arbitre qui peut entrer.

2. Appareil de commande d'accès selon la revendication 1, dans lequel le sous-arbitre surveille une demande d'accès à la mémoire en provenance de l'arbitre et exerce une commande de telle sorte que dans un cas où l'efficacité d'accès serait détériorée si le sous-arbitre émettait une demande d'accès à la mémoire, le sous-arbitre s'abstient d'émettre la demande d'accès.

3. Appareil de commande d'accès à une mémoire comprenant l'appareil de commande d'accès selon la revendication 5, dans lequel lesdits appareils maîtres sont des maîtres mémoire, ledit dispositif est une mémoire, ladite unité de commande est une unité de commande de mémoire et ladite destination d'accès du dispositif est un bloc mémoire.

4. Appareil d'accès à une mémoire selon la revendication 3, dans lequel le sous-arbitre surveille une demande d'accès à la mémoire en provenance de l'arbitre et exerce un contrôle de telle sorte que dans un cas où l'efficacité d'accès à la mémoire serait détériorée si le sous-arbitre émettait une demande d'accès à la mémoire, le sous-arbitre s'abstient d'émettre la demande d'accès à la mémoire à l'unité de commande de mémoire.

5. Appareil d'accès à la mémoire selon la revendication 3, dans lequel dans un cas où il y a une pluralité des mémoires maîtres qui satisfont une condition selon laquelle il n'y aura pas de déclin dans l'efficacité d'accès à la mémoire, même si un accès à la mémoire pour lequel la demande d'accès a été autorisée par l'arbitre et qui est actuellement en cours d'exécution et un accès à la mémoire que le sous-arbitre accepte sont exécutés à la suite, lorsque le sous-arbitre accepte les demandes d'accès en provenance d'une pluralité des maîtres mémoire pendant que l'unité de commande de mémoire qui a reçu une demande d'accès en provenance de l'arbitre émise par le maître mémoire est en train d'exécuter un accès à la mémoire,
le sous-arbitre sélectionne le maître mémoire pour lequel la demande d'accès doit être exécutée parmi la pluralité des maîtres mémoire qui satisfont la condition conformément à un critère prédéterminé, et
l'unité de commande de mémoire exécute la demande d'accès sélectionnée par le sous-arbitre.

6. Appareil d'accès à la mémoire selon la revendication 3, dans lequel le sous-arbitre comprend :
l'un ou une pluralité de comparateurs d'accès, en association à certains respectifs d'un ou d'une pluralité de maîtres mémoire connectés à ce dernier, chacun des comparateurs d'accès comparant le contenu d'accès d'un maître mémoire que l'arbitre est actuellement en train d'exécuter et le contenu d'accès que le maître mémoire demande ; et
une section d'arbitrage qui sélectionne un maître mémoire parmi la pluralité de maîtres mémoire ;
dans lequel le sous-arbitre surveille une demande d'accès en provenance d'un maître mémoire, parmi la pluralité de maîtres mémoire, dont on souhaite raccourcir la latence d'accès à la mémoire ; et
décide, au moyen des comparateurs d'accès connectés aux maîtres mémoire, si une condition est satisfaite, la condition étant que les demandes d'accès à la mémoire aient été émises depuis un ou plusieurs maîtres mémoire, l'arbitre exécute un accès à la mémoire, et il n'y aura pas de déclin dans l'efficacité d'accès à la mémoire, même si l'accès à la mémoire en cours d'exécution par l'arbitre et l'accès à la mémoire pour lequel une demande d'accès doit être acceptée par le sous-arbitre sont exécutés à la suite, et
accepte une demande d'accès dans un cas où il y a un ou plusieurs maîtres mémoire pour lesquels les résultats de la décision par les comparateurs d'accès sont vrais.
